# EUROPEAN PATENT SPECIFICATION

(11) **EP 4 494 947 B1**
(45) Date of publication and mention of the grant of the patent: **22.04.2026**
(21) Application number: 23208877.3
(22) Date of filing: 09.11.2023
(51) Int. Cl.: B60R 19/03, B60R 19/04, B60R 19/18, B32B 5/18

(54) **VEHICLE BUMPER AND METHOD OF MANUFACTURING THE SAME**
FAHRZEUGSTOSSFÄNGER UND VERFAHREN ZU SEINER HERSTELLUNG
PARE-CHOCS DE VÉHICULE ET SON PROCÉDÉ DE FABRICATION

(30) Priority: 17.07.2023 KR 20230092255
(43) Date of publication of application: 22.01.2025
(73) Proprietor: Hyundai Mobis Co., Ltd., Gangnam-gu Seoul 06141 (KR); KOLON SPACEWORKS CO.,LTD., Haman-gun, Gyeongsangnam-do 52061 (KR)
(72) Inventor: KIM, Seong Kwon, 16891 Yongin-si (KR); NA, Hyung Jun, 07793 Seoul (KR); NAM, Jae Du, 07793 Seoul (KR); KIM, Hyeong Gyun, 07793 Seoul (KR)
(74) Representative: Vossius & Partner Patentanwälte Rechtsanwälte mbB

(56) References cited:
- US-A- 4 171 143

## Description

### BACKGROUND

### 1. Field of the Invention

The present invention relates to a vehicle bumper and a method of manufacturing the same.

### 2. Discussion of Related Art

A bumper mounted on a vehicle is a component that absorbs impact in the event of a collision and is disposed at the front or rear of the vehicle in the longitudinal direction of the vehicle. Recent bumpers are manufactured through a long fiber injection (LFI) process, and in this case, the bumper may include a panel unit exposed to the outside of the vehicle and a reinforcing part that is combined with the panel unit and reinforces the rigidity of the panel unit.

The above bumper is formed such that one reinforcing part is coupled to one panel unit. Therefore, compared to injection molding, pressing, painting, and post-processing processes of manufacturing recent bumpers, recent bumpers are subjected to vacuum-forming, foaming, and post-processing, so the costs for manufacturing or using a mold can be reduced, but post-processing costs are relatively high. In addition, since the recent bumpers are formed such that a panel unit and a reinforcing part are manufactured and then combined, there is a problem in that the difficulty of manufacturing and assembling each component increases. Therefore, the need for a process for reinforcing the rigidity of a plurality of panel units in addition to connecting the plurality of panel units into one using the reinforcing part is increasing.

US 4 171 143 A relates to bumper for a motor vehicle, consisting of a support body extending over the vehicle width and supported at fixed vehicle parts, which receives in its upper area a preferably surface-finished cover that is adjoined by a covering member consisting of elastic synthetic material which covers off at least the remaining visible area of the support body.

### SUMMARY OF THE INVENTION

The invention is defined by the independent claims. Further embodiments of the invention are defined by the dependent claims. The present invention is directed to providing an improved vehicle bumper, in which a plurality of panel units are connectable through one reinforcing part, and a method of manufacturing the same.

According to an aspect of the present invention, there is provided a vehicle bumper includes a panel unit including a first panel forming a main protection area and a second panel coupled to the first panel and forming an additional protection area at one side of the main protection area; and a reinforcing panel disposed on non-exposed surfaces of the first panel and the second panel and fixing the first panel and the second panel to each other.

The first panel may include a first cover part and a first coupling part, and the second panel may include a second cover part and a second coupling part, wherein the reinforcing panel may include a first reinforcing part disposed on a non-exposed surface of the first cover part, a second reinforcing part disposed on a non-exposed surface of the second cover part, and a connecting part connecting the first reinforcing part and the second reinforcing part and surrounding the first coupling part of the first panel and the second coupling part of the second panel.

The non-exposed surfaces of the first panel and the second panel are coated with the reinforcing panel in a form of a mixture, optionally of polyurethane and long glass fibers, and then foamed and shaped in spaces between the first panel, the second panel, and a mold disposed on the first panel and the second panel.

The first panel may further include a first bent part having a shape bent from an end of the first coupling part and covering an area in which the first coupling part of the first panel and the second coupling part of the second panel are in contact with each other.

The second panel may further include a second bent part having a shape bent from an end of the second coupling part and covering an area in which the first coupling part of the first panel and the second coupling part of the second panel are in contact with each other.

The vehicle bumper may further include a blocking member disposed at an end portion of the first coupling part of the first panel and an end portion of the second coupling part of the second panel and covering between the end portion of the first coupling part of the first panel and the end portion of the second coupling part of the second panel.

The blocking member may be disposed between the first coupling part of the first panel and the connecting part of the reinforcing panel and disposed between the second coupling part of the second panel and the connecting part of the reinforcing panel.

**In** addition, a method of manufacturing a vehicle bumper includes seating a first panel and a second panel in a first mold, coating the first panel and the second panel with a reinforcing panel in the form of a mixture, and forming a reinforcing panel by pressing the first panel and the second panel coated with the mixture is with a second mold.

The seating of the first panel and the second panel in the first mold may include a process of arranging a blocking member on the first panel and the second panel seated in the first mold.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a rear perspective view of a vehicle bumper according to an embodiment of the present invention;
FIG. 2 is an exploded perspective view of a vehicle bumper according to an embodiment of the present invention;
FIG. 3 is a cross-sectional view illustrating a vehicle bumper;
FIG. 4A is a view illustrating a first bent part;
FIG. 4B is a view illustrating a second bent part;
FIG. 5 is a view illustrating a blocking member disposed on a first panel and a second panel;
FIG. 6 is a flowchart illustrating a method of manufacturing a vehicle bumper; and.
FIG. 7 is a view illustrating a reinforcing panel disposed on a first panel and a second panel.

### DETAILED DESCRIPTION OF EXEMPLARY EMBODIMENTS

Terms including ordinal numbers, such as first and second, may be used to describe various components, but the components are not limited by these terms. These terms are only used for the purpose of distinguishing one component from another. For example, a second element may be called a first element, and similarly, a first element may be called a second element, without departing from the scope of the present invention. The terms "and/or" include any one or combination of a plurality of related recited items.

It is understood that when a first element is referred to as being "connected" or "coupled" to a second element, it may be directly connected or coupled to the second element, or a third element may present therebetween. On the other hand, when a first element is referred to as "directly connected" or "directly coupled" to a second element, it should be understood that no other element is disposed therebetween.

In the description of the embodiment, in the case where one component is described as being formed "on or under" another component, the on or under includes both cases in which there is direct contact between two components and cases in which there is indirect contact by placing one or more other components between the two components. In addition, when expressed as "on or under," it may include the meaning of not only the upward direction but also the downward direction based on one component.

Terms used in this application are only used to describe specific embodiments, and are not intended to limit the present invention. Singular expressions include plural expressions unless the context clearly dictates otherwise. In this application, although terms such as "include" or "have" are intended to designate the presence of features, numbers, steps, operations, components, parts, or combinations thereof described in the specification, it should be understood that the possibility of the presence or addition of one or more other features numbers, steps, operations, components, parts, or combinations thereof is not precluded.

Unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in this application, it should not be interpreted in an ideal or excessively formal meaning.

Hereinafter, a vehicle bumper and a method of manufacturing the same will be described in detail with reference to the accompanying drawings, but the same reference numbers will be given to the same or corresponding components regardless of reference numbers, and overlapping descriptions thereof will be omitted.

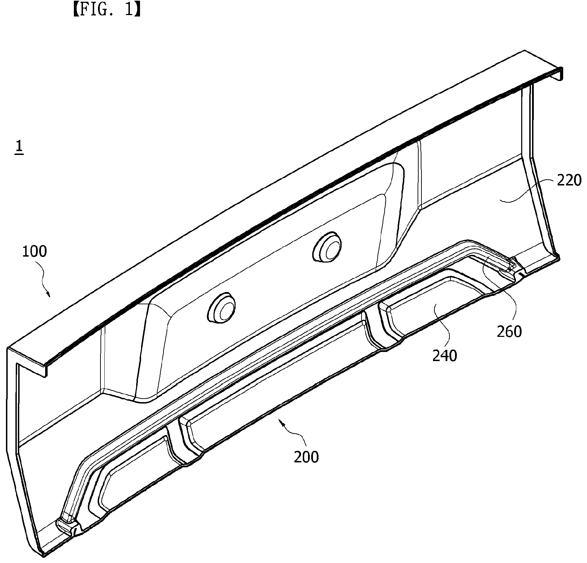

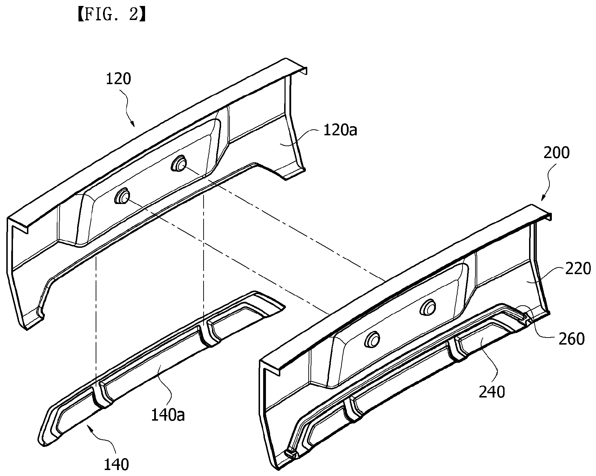

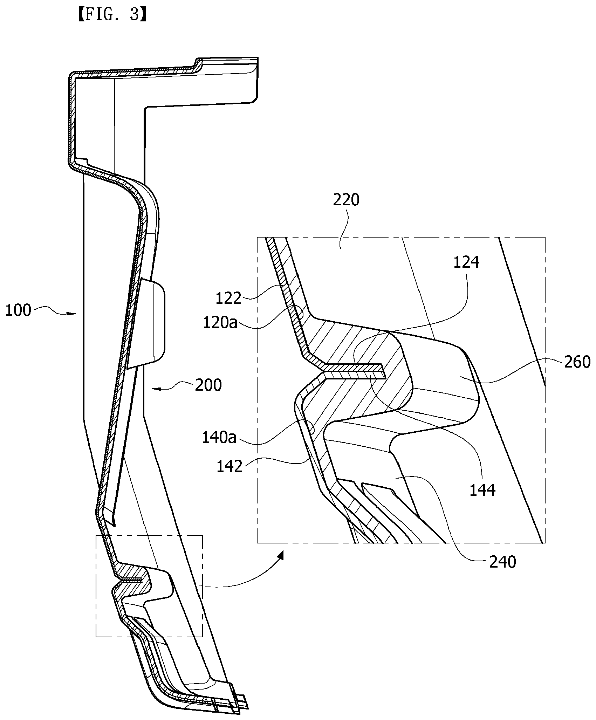

FIG. 1 is a rear perspective view of a vehicle bumper according to an embodiment of the present invention, FIG. 2 is an exploded perspective view of the vehicle bumper according to the embodiment of the present invention, and FIG. 3 is a cross-sectional view of the vehicle bumper.

Referring to FIGS. 1 to 3, a vehicle bumper 1 according to the embodiment of the present invention may includes a panel unit 100 and a reinforcing panel 200.

As the panel unit 100 is one component of the vehicle body that forms the exterior of the vehicle, the panel unit 100 may be disposed at the front of the bonnet or at the rear of the trunk in the longitudinal direction of the vehicle (a direction from a passenger compartment to an engine compartment). The panel unit 100 includes a first panel 120 and a second panel 140.

The first panel 120 forms a main protection area that absorbs impact from a collision. The second panel 140 forms an additional protection area on one side (lower side) of the main protection area. The first panel 120 and the second panel 140 are coupled to each other.

The first panel 120 may include a first cover part 122 and a first coupling part 124.

The first cover part 122 may be a main component of the first panel 120. The first coupling part 124 is disposed on a portion of the edge region of the first cover part 122, and the first coupling part 124 may protrude from a non-exposed surface of the first cover part 122 (hereinafter referred to as "first non-exposed surface"). Here, the first non-exposed surface 120a may be a surface that is not exposed to the outside of the vehicle in a state in which the first panel 120 is coupled to the vehicle body. That is, in a state in which the first panel 120 is coupled to the vehicle body, the first coupling part 124 may be disposed to face the inside of the vehicle from the first cover part 122.

The second panel 140 may include a second cover part 142 and a second coupling part 144.

The second cover part 142 may be a main component of the second panel 140. The second cover part 142 may extend from the first cover part 122 of the first panel 120 to form a protection area. The second coupling part 144 is disposed on a part of the edge area of the second cover part 142, and the second coupling part 144 may protrude from a non-exposed surface of the second cover part 142 (hereinafter referred to as "second non-exposed surface 140a"). Here, the second non-exposed surface 140a may be a surface that is not exposed to the outside of the vehicle in a state in which the second panel 140 is coupled to the vehicle body. That is, in a state in which the second panel 140 is coupled to the vehicle body, the second coupling part 144 may be disposed to face the inside of the vehicle from the second cover part 142.

In this embodiment, the panel unit 100 includes the first panel 120 and the second panel 140, but is not limited thereto, and the panel unit 100 may be composed of two or more panels coupled to each other.

As shown in FIG. 3, when the second panel 140 is coupled to the first panel 120, the second coupling part 144 may maintain a state of being in contact with the first coupling part 124. At this time, lengths of the first coupling part 124 and the second coupling part 144 may be the same, and the lengths of the first coupling part 124 and the second coupling part 144 may be 10 mm or more, but are not limited thereto. The lengths of the first coupling part 124 and the second coupling part 144 may be 10 mm or less. In this way, as the contact between the first coupling part 124 and the second coupling part 144 enhances the coupling between the first panel 120 and the second panel 140 while not exposing the coupling structure to the outside, it may be a configuration that improves the design of the panel unit 100.

The reinforcing panel 200 may be disposed on the non-exposed surfaces (first non-exposed surface 120a and second non-exposed surface 140a) of the first panel 120 and the second panel 140. The reinforcing panel 200 may fix the first panel 120 and the second panel 140 to each other. The reinforcing panel 200 may include a first reinforcing part 220, a second reinforcing part 240, and a connecting part 260.

The first reinforcing part 220 may be disposed on the non-exposed surface of the first cover part 122. The first reinforcing part 220 may have a thickness corresponding to a thickness of the first cover part 122 of the first panel 120, but is not limited thereto. The first reinforcing part 220 may be coupled to the first non-exposed surface 120a of the first cover part 122 of the first panel 120 to reinforce the rigidity of the first panel 120. The first reinforcing part 220 may be provided in a shape corresponding to the shape of the first panel 120, but is not limited thereto.

The second reinforcing part 240 may be disposed on the non-exposed surface of the second cover part 142. The second reinforcing part 240 may have a thickness corresponding to a thickness of the second cover part 142 of the second panel 140, but is not limited thereto. The second reinforcing part 240 may be spaced apart from the first reinforcing part 220 with the connecting part 260 interposed therebetween. The second reinforcing part 240 may be coupled to the second non-exposed surface 140a of the second cover part 142 of the second panel 140 to reinforce the rigidity of the second panel 140. The second reinforcing part 240 may be provided in a shape corresponding to the shape of the second panel 140, but is not limited thereto.

The connecting part 260 may be disposed between the first reinforcing part 220 and the second reinforcing part 240. The connecting part 260 may be connected to the first reinforcing part 220 and the second reinforcing part 240 to connect the first reinforcing part 220 and the second reinforcing part 240. As shown in FIG. 3, the connecting part 260 may have a thickness corresponding to a thickness of each of the first coupling part 124 of the first panel 120 and the second coupling part 144 of the second panel 140, but is not limited thereto.

The connecting part 260 may surround the first coupling part 124 of the first panel 120 and the second coupling part 144 of the second panel 140. More specifically, the connecting part 260 is connected to the first reinforcing part 220 and the second reinforcing part 240 and, since it has a shape similar to "⊂," the connecting part 260 may press the first reinforcing part 220 toward the second reinforcing part 240 and press the second reinforcing part 240 toward the first reinforcing part 220. That is, the connecting part 260 may serve as a clamp to increase the bonding force between the first panel 120 and the second panel 140.

The non-exposed surfaces of the first panel 120 and the second panel 140 are coated with the reinforcing panel 200 in the form of a mixture, optionally of polyurethane and long glass fibers, and then the reinforcing panel 200 is foamed and shaped in the spaces between the first panel 120, the second panel 140, and the mold disposed on the first panel 120 and the second panel 140. A thickness of the reinforcing panel 200 formed in this way may be in the range of 2 mm to 3 mm, but is not limited thereto, and may be changed according to the thickness of the first panel 120 and the second panel 140.

Therefore, the reinforcing panel 200 is formed in close contact with the first panel 120 and the second panel 140 while corresponding to the shape of the first panel 120 and the second panel 140 in a coupled state. That is, the reinforcing panel 200 can reduce the need for parts such as existing beams for reinforcing the rigidity of the first panel 120 and the second panel 140. Therefore, the reinforcing panel 200 secures a space between the vehicle bumper 1 and the components facing the vehicle bumper 1, and it is also possible to reduce the weight of the panel unit 100. Therefore, a reduction in weight of a vehicle can be achieved through the reinforcing panel 200. In addition, since the reinforcing panel 200 reinforces the rigidity of the panel unit 100 on the non-exposed surface of the panel unit 100, the degree of freedom in vehicle design can be improved.

In the above, the reinforcing panel 200 has been exemplified as being disposed on the first panel 120 and the second panel 140, but is not limited thereto, and the reinforcing panel 200 may be applied to various parts constituting the exterior of a vehicle. For example, the reinforcing panel 200 may be disposed on a non-exposed surface of a fender, disposed on a non-exposed surface of a bonnet, disposed on a non-exposed surface of a trunk and disposed on a non-exposed surface of a door. That is, the reinforcing panel 200 may be applied to any parts forming the exterior of a vehicle to increase the rigidity of the parts forming the exterior of the vehicle.

Hereinafter, bent parts will be described.

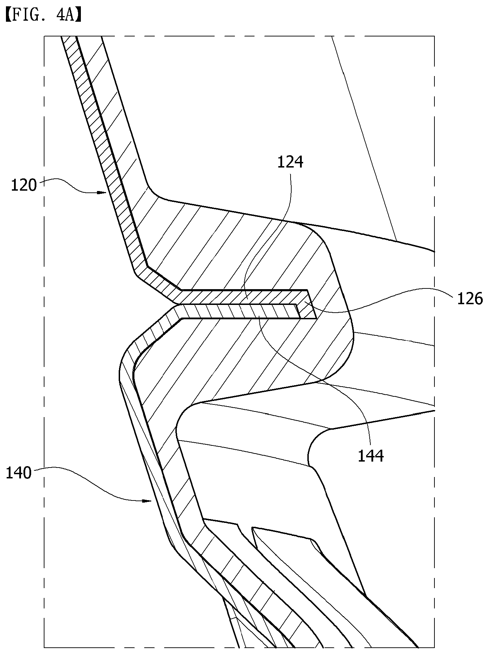

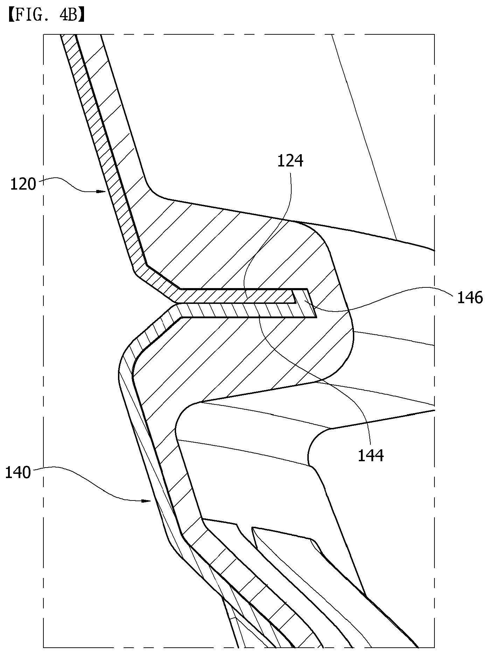

FIG. 4A is a view showing a first bent part, and FIG. 4B is a view showing a second bent part.

Referring to FIG. 4A, the first panel 120 may further include a first bent part 126. The first bent part 126 may be disposed on the first coupling part 124 of the first panel 120. The first bent part 126 may have a shape bent from the end of the first coupling part 124. In this case, a bending direction of the first bent part 126 may correspond to a direction from the first panel 120 toward the second panel 140. Therefore, when the first coupling part 124 of the first panel 120 and the second coupling part 144 of the second panel 140 are coupled, the first bent part 126 is disposed outside the end of the second coupling part 144.

That is, the first bent part 126 may cover an area in which the first coupling part 124 is in contact with the second coupling part 144. More specifically, the first bent part 126 may cover a gap formed between the first coupling part 124 and the second coupling part 144. That is, when the first panel 120 and the second panel 140 are coated with a mixture of polyurethane and long glass fibers described above, the first bent part 126 may prevent the mixture from flowing into a gap formed by the first coupling part 124 and the second coupling part 144.

Accordingly, the mixture can prevent an increase of a gap between the first panel 120 and the second panel 140, and a phenomenon in which functions, such as shock absorption and protection from foreign substances, of the panel unit 100 are degraded can be prevented. In addition, the first bent part 126 may prevent a phenomenon in which the aesthetics of the design of the panel unit 100 is impaired due to the mixture flowing to the exposed surfaces of the first panel 120 and the second panel 140.

Referring to FIG. 4B, the second panel 140 may further include a second bent part 146. The second bent part 146 may be disposed on the second coupling part 144 of the second panel 140. The second bent part 146 may have a shape bent from an end of the second coupling part 144. In this case, a bending direction of the second bent part 146 may correspond to a direction from the second panel 140 toward the first panel 120. Therefore, the second bent part 146 may be disposed outside the end of the first coupling part 124 when the first coupling part 124 of the first panel 120 and the second coupling part 144 of the second panel 140 are coupled.

That is, the second bent part 146 may cover an area in which the first coupling part 124 is in contact with the second coupling part 144. More specifically, the second bent part 146 may cover a gap formed between the first coupling part 124 and the second coupling part 144. Since the effect of this is the same as that of the first bent part 126, a description thereof will be omitted.

Hereinafter, the blocking member 300 will be described.

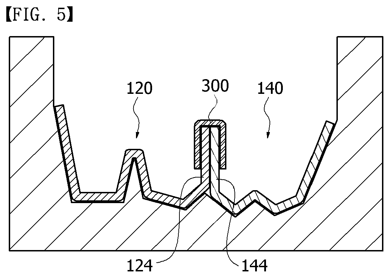

FIG. 5 is a view showing the blocking member disposed on the first panel and the second panel.

Referring to FIG. 5, the vehicle bumper 1 may further include a blocking member 300. The blocking member 300 may be disposed at an end portion of the first coupling part 124 of the first panel 120 and an end portion of the second coupling part 144 of the second panel 140. The blocking member 300 may close a gap between the first coupling part 124 of the first panel 120 and the second coupling part 144 of the second panel 140. The blocking member 300 may be coupled to the first panel 120 and the second panel 140 before the first panel 120 and the second panel 140 are coated with a mixture of polyurethane and long glass fibers. Therefore, the blocking member 300 can prevent the coating mixture from flowing into the gap between the first coupling part 124 and the second coupling part 144.

As shown in FIG. 5, the blocking member 300 may be a rubber material strip. **In** this case, the strip may have a "⊂" cross-sectional shape and may have a length in a direction in which the first coupling part 124 and the second coupling part 144 are disposed.

That is, the strip-type blocking member 300 may be disposed between the first coupling part 124 of the first panel 120 and the connecting part 260 of the reinforcing panel 200 and disposed between the second coupling part 144 of the second panel 140 and the connecting part 260 of the reinforcing panel 200. Therefore, when the reinforcing panel is formed on the non-exposed sides of the first panel 120 and the second panel 140, as the blocking member 300 is fixed by the reinforcing panel 200, since the holding time of the holding force of the blocking member 300 clamping the first panel 120 and the second panel 140 is increased, the coupled state between the first panel 120 and the second panel 140 can be firmly maintained.

The blocking member 300 may be a single-sided tape having viscosity. The single-sided tape-type blocking member 300 may surround the end portion of the first coupling part 124 in a "⊂" shape in the same way as the strip-type blocking member 300, and the viscous surface may close the surface forming a gap between the first coupling part 124 and the second coupling part 144.

The blocking member 300 may be a staple. The staple-type blocking member 300 may pass through one of the first coupling part 124 and the second coupling part 144 and then pass through the other to fix the first coupling part 124 and the second coupling part 144 to each other. Since the staple pulls the first coupling part 124 and the second coupling part 144 toward each other, a gap formed between the first coupling part 124 and the second coupling part 144 may not widen.

The blocking member 300 may be a clip. The clip-type blocking member 300 may have a cross-sectional shape corresponding to the strip-type blocking member 300, and may have a shorter length than the strip-type blocking member 300. A plurality of clip-type blocking members 300 may be spaced apart from each other on the first coupling part 124 and the second coupling part 144 coupled to each other.

The blocking member 300 may be a double-sided tape having viscosity. The double-sided tape-type blocking member 300 may be disposed on a surface where the first coupling part 124 and the second coupling part 144 are in contact with each other. Therefore, when the first panel 120 and the second panel 140 are coated with a mixture of polyurethane and long glass fibers, the double-sided tape-type blocking member 300 may prevent the mixture flowing to the exposed surfaces of the first panel 120 and the second panel 140 through the gap formed between the end of the first coupling part 124 and the end of the second coupling part 144 coupled to each other.

**In** addition, the double-sided tape-type blocking member 300 may be disposed on end surfaces of the first coupler 124 and the second coupler 144 disposed parallel to each other. Thus, the double-sided tape type blocking member 300 may close a gap formed between the end of the first coupling part 124 and the end of the second coupling part 144 coupled to each other..

In addition, the blocking member 300 may have a shape corresponding to a shape of a portion in which the first coupling part 124 and the second coupling part 144 are coupled to each other. In this case, the blocking member 3000 may be made of a rigid material (e.g., plastic). That is, when the shapes of the first coupling part 124 and the second coupling part 144 are complicated, a gap formed between the end of the first coupling part 124 and the end of the second coupling part 144 coupled to each other may be closed through the blocking member 300 having a shape corresponding to the shape of the first coupling part 124 and the second coupling part 144.

Hereinafter, a process of manufacturing a vehicle bumper 1 will be described.

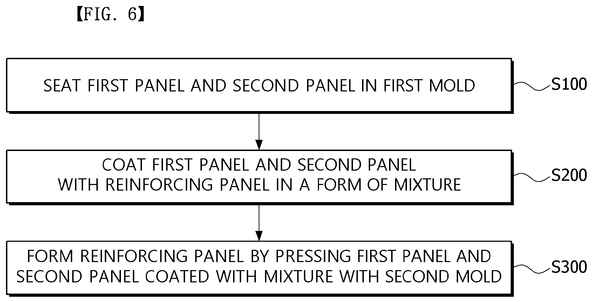

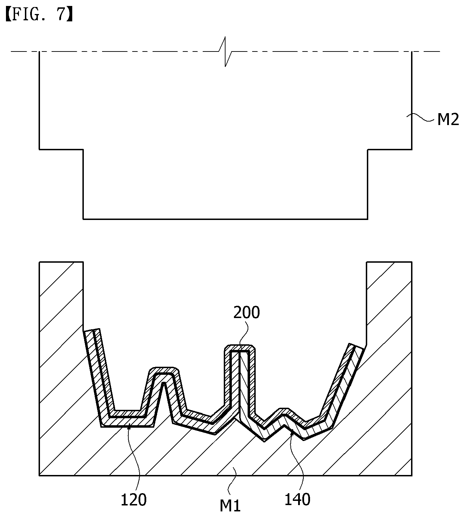

FIG. 6 is a flow-chart illustrating a method of manufacturing a vehicle bumper, and FIG. 7 is a view showing a reinforcing panel disposed on a first panel and a second panel.

Referring to FIGS. 6 and 7, a method of manufacturing a vehicle bumper 1 may include seating a first panel 120 and a second panel 140 in a first mold (S100), coating the first panel 120 and the second panel 140 with a reinforcing panel 200 in the form of a mixture (S200), and forming the reinforcing panel 200 by pressing the first panel 120 and the second panel 140 coated with the mixture with a second mold (S300). Here, the reinforcing panel 200 in the form of a mixture may be a composition in which polyurethane and long glass fibers are mixed.

As shown in FIG. 7, the seating of the first panel 120 and the second panel 140 in the first mold (S 100) may include a process of arranging the first panel 120 in the first mold so that the exposed surface of the first panel 120 faces the first mold and arranging the second panel 140 in the first mold so that the exposed surface of the second panel 140 faces the first mold.

In addition, the coating of the first panel 120 and the second panel 140 with the reinforcing panel 200 in the form of a mixture through spraying (S200) may include coating the first non-exposed surface 120a of the first panel 120 and the second non-exposed surface 140a of the second panel 140 with the reinforcing panel 200.

In addition, the seating of the first panel 120 and the second panel 140 in the first mold (S100) may include a process of arranging the blocking member 300 on the first panel 120 and the second panel 140 seated in the first mold. The blocking member 300 may be omitted according to the shape or coating process of the first panel 120 and the second panel 140.

As such, after the first panel 120 and the second panel 140 are coated with the mixture, when the second mold presses the first panel 120 and the second panel 140, as the mixture is foamed by the pressing force and the heat generated by the pressing force, the shape of the reinforcing panel 200 may be determined by filling a space formed by the first panel 120, the second panel 140, and the second mold with the mixture. Therefore, the vehicle bumper 1 has a structure in which the reinforcing panel 200 is disposed in close contact with the first panel 120 and the second panel 140, and thus, a reduction in weight and rigidity reinforcement can be simultaneously achieved by the vehicle bumper 1.

According to one embodiment, since a plurality of a first panel and a second panel in the vehicle bumper are connected through a reinforcing panel, there is no need for parts for connecting a plurality of panels, thereby reducing manufacturing costs and manufacturing time. In addition, since the vehicle bumper has a simplified configuration composed of a panel unit and a reinforcing panel, post-processing time and costs can be reduced.

In addition, through a reinforcing panel, the vehicle bumper can have excellent rigidity and heat resistance higher than or equal to those of the conventional bumper.

## Claims

1. A vehicle bumper comprising:
a panel unit (100) including a first panel (120) having a main protection area and a second panel (140) coupled to the first panel (120) and having an additional protection area at one side of the main protection area; and
a reinforcing panel (200) disposed on non-exposed surfaces (120a, 140a) of the first panel (120) and the second panel (140) and fixing the first panel (120) and the second panel (140) to each other,
**characterized in that**
the non-exposed surfaces (120a, 140a) of the first panel (120) and the second panel (140) are coated with the reinforcing panel (200) in a form of a mixture and then the reinforcing panel (200) is foamed and shaped in spaces between the first panel (120), the second panel (140), and a mold disposed on the first panel (120) and the second panel (140).

2. The vehicle bumper of claim 1, wherein the first panel (120) includes a first cover part (122) and a first coupling part (124),
the second panel (140) includes a second cover part (142) and a second coupling part (144), and
the reinforcing panel (200) includes a first reinforcing part (220) disposed on a non-exposed surface (120a, 140a) of the first cover part (122), a second reinforcing part (240) disposed on a non-exposed surface (120a, 140a) of the second cover part (142), and a connecting part (260) connecting the first reinforcing part (220) and the second reinforcing part (240) and surrounding the first coupling part (124) of the first panel (120) and the second coupling part (144) of the second panel (140).

3. The vehicle bumper of claim 2, wherein the first panel (120) further includes a first bent part (126) having a shape bent from an end of the first coupling part (124) and covering an area in which the first coupling part (124) of the first panel (120) and the second coupling part (144) of the second panel (140) are in contact with each other.

4. The vehicle bumper of claim 2 or 3, wherein the second panel (140) further includes a second bent part (146) having a shape bent from an end of the second coupling part (144) and covering an area in which the first coupling part (124) of the first panel (120) and the second coupling part (144) of the second panel (140) are in contact with each other.

5. The vehicle bumper of any one of claims 1 to 4, wherein the mixture is a composition in which polyurethane and long glass fibers are mixed.

6. A method of manufacturing a vehicle bumper according to claim 1, **characterized by**
placing a first panel (120) and a second panel (140) in a first mold;
coating the first panel (120) and the second panel (140) with a mixture; and
forming a reinforcing panel (200) by pressing the first panel (120) and the second panel (140) coated with the mixture with a second mold to foam and shape the reinforcing panel (200) in spaces between the first panel (120), the second panel (140), and the second mold.

7. The method of claim 6, wherein the placing of the first panel (120) and the second panel (140) in the first mold includes a process of arranging a blocking member (300, 3000) on the first panel (120) and the second panel (140) in the first mold.

8. The method of claim 6 or 7, wherein the mixture is a composition in which polyurethane and long glass fibers are mixed.

9. The method of any one of claims 6 to 8, wherein the coating of the first panel (120) and the second panel (140) with the reinforcing panel (200) is in the form of a mixture through spraying (S200) and includes coating the first non-exposed surface (120a) of the first panel (120) and the second non-exposed surface (140a) of the second panel (140) with the reinforcing panel (200).

## Patentansprüche

1. Fahrzeugstoßstange, aufweisend:
eine Paneeleinheit (100) mit einem ersten Paneel (120), das einen Hauptschutzbereich aufweist, und einem zweiten Paneel (140), das mit dem ersten Paneel (120) gekoppelt ist und einen zusätzlichen Schutzbereich an einer Seite des Hauptschutzbereichs aufweist; und
ein Verstärkungspaneel (200), das auf nicht freiliegenden Flächen (120a, 140a) des ersten Paneels (120) und des zweiten Paneels (140) angeordnet ist und das erste Paneel (120) und das zweite Paneel (140) aneinander befestigt,
**dadurch gekennzeichnet, dass**
die nicht freiliegenden Flächen (120a, 140a) des ersten Paneels (120) und des zweiten Paneels (140) mit dem Verstärkungspaneel (200) in Form eines Gemischs beschichtet werden und dann das Verstärkungspaneel (200) in Räumen zwischen dem ersten Paneel (120), dem zweiten Paneel (140) und einer auf dem ersten Paneel (120) und dem zweiten Paneel (140) angeordneten Form aufgeschäumt und geformt wird.

2. Fahrzeugstoßstange nach Anspruch 1, wobei das erste Paneel (120) ein erstes Abdeckteil (122) und ein erstes Kopplungsteil (124) aufweist,
das zweite Paneel (140) ein zweites Abdeckteil (142) und ein zweites Kopplungsteil (144) aufweist, und
das Verstärkungspaneel (200) ein erstes Verstärkungsteil (220), das auf einer nicht freiliegenden Fläche (120a, 140a) des ersten Abdeckteils (122) angeordnet ist, ein zweites Verstärkungsteil (240), das auf einer nicht freiliegenden Fläche (120a, 140a) des zweiten Abdeckteils (142) angeordnet ist, und ein Verbindungsteil (260) aufweist, das das erste Verstärkungsteil (220) und das zweite Verstärkungsteil (240) verbindet und das erste Kopplungsteil (124) des ersten Paneels (120) und das zweite Kopplungsteil (144) des zweiten Paneels (140) umgibt.

3. Fahrzeugstoßstange nach Anspruch 2, wobei das erste Paneel (120) ferner ein erstes gebogenes Teil (126) aufweist, das eine von einem Ende des ersten Kopplungsteils (124) aus gebogene Form hat und einen Bereich abdeckt, in dem das erste Kopplungsteil (124) des ersten Paneels (120) und das zweite Kopplungsteil (144) des zweiten Paneels (140) miteinander in Kontakt stehen.

4. Fahrzeugstoßstange nach Anspruch 2 oder 3, wobei das zweite Paneel (140) ferner ein zweites gebogenes Teil (146) aufweist, das eine von einem Ende des zweiten Kupplungsteils aus (144) gebogene Form aufweist und einen Bereich abdeckt, in dem das erste Kopplungsteil (124) des ersten Paneels (120) und das zweite Kopplungsteil (144) des zweiten Paneels (140) miteinander in Kontakt stehen.

5. Fahrzeugstoßstange nach einem der Ansprüche 1 bis 4, wobei das Gemisch eine Zusammensetzung ist, in der Polyurethan und Langglasfasern gemischt sind.

6. Verfahren zur Herstellung einer Fahrzeugstoßstange nach Anspruch 1, **gekennzeichnet durch**
Einlegen eines ersten Paneels (120) und eines zweiten Paneels (140) in eine erste Form;
Beschichten des ersten Paneels (120) und des zweiten Paneels (140) mit einem Gemisch; und
Bilden eines Verstärkungspaneels (200) durch Pressen des ersten Paneels (120) und des zweiten Paneels (140), die mit dem Gemisch beschichtet sind, mit einer zweiten Form, um das Verstärkungspaneel (200) in Räumen zwischen dem ersten Paneel (120), dem zweiten Paneel (140) und der zweiten Form aufzuschäumen und zu formen.

7. Verfahren nach Anspruch 6, wobei das Anordnen des ersten Paneels (120) und des zweiten Paneels (140) in der ersten Form einen Prozess des Anordnens eines Blockierungselements (300, 3000) auf dem ersten Paneel (120) und dem zweiten Paneel (140) in der ersten Form umfasst.

8. Verfahren nach Anspruch 6 oder 7, wobei das Gemisch eine Zusammensetzung ist, in der Polyurethan und Langglasfasern gemischt sind.

9. Verfahren nach einem der Ansprüche 6 bis 8, wobei das Beschichten des ersten Paneels (120) und des zweiten Paneels (140) mit dem Verstärkungspaneel (200) in Form eines Gemischs durch Sprühen (S200) erfolgt und das Beschichten der ersten nicht freiliegenden Fläche (120a) des ersten Paneels (120) und der zweiten nicht freiliegenden Fläche (140a) des zweiten Paneels (140) mit dem Verstärkungspaneel (200) umfasst.

## Revendications

1. Pare-chocs de véhicule comprenant :
une unité de panneau (100) comprenant un premier panneau (120) ayant une zone de protection principale et un deuxième panneau (140) couplé au premier panneau (120) et ayant une zone de protection supplémentaire au niveau d'un côté de la zone de protection principale ; et
un panneau de renforcement (200) disposé sur des surfaces non exposées (120a, 140a) du premier panneau (120) et du deuxième panneau (140) et fixant le premier panneau (120) et le deuxième panneau (140) entre eux,
**caractérisé en ce que** :
les surfaces non exposées (120a, 140a) du premier panneau (120) et du deuxième panneau (140) sont recouvertes avec le panneau de renforcement (200) se présentant sous la forme d'un mélange et ensuite le panneau de renforcement (200) est expansé et mis en forme dans des espaces entre le premier panneau (120), le deuxième panneau (140) et un moule disposé sur le premier panneau (120) et le deuxième panneau (140).

2. Pare-chocs de véhicule selon la revendication 1, dans lequel le premier panneau (120) comprend une première partie de couvercle (122) et une première partie de couplage (124),
le deuxième panneau (140) comprend une deuxième partie de couvercle (142) et une deuxième partie de couplage (144), et
le panneau de renforcement (200) comprend une première partie de renforcement (220) disposée sur une surface non exposée (120a, 140a) de la première partie de couvercle (122), une deuxième partie de renforcement (240) disposée sur une surface non exposée (120a, 140a) de la deuxième partie de couvercle (142), et une partie de raccordement (260) raccordant la première partie de renforcement (220) et la deuxième partie de renforcement (240) et entourant la première partie de couplage (124) du premier panneau (120) et la deuxième partie de couplage (144) du deuxième panneau (140).

3. Pare-chocs de véhicule selon la revendication 2, dans lequel le premier panneau (120) comprend en outre une première partie courbée (126) ayant une forme courbée à partir d'une extrémité de la première partie de couplage (124) et recouvrant une zone dans laquelle la première partie de couplage (124) du premier panneau (120) et la deuxième partie de couplage (144) du deuxième panneau (140) sont en contact entre elles.

4. Pare-chocs de véhicule selon la revendication 2 ou 3, dans lequel le deuxième panneau (140) comprend en outre une deuxième partie courbée (146) ayant une forme courbée à partir d'une extrémité de la deuxième partie de couplage (144) et recouvrant une zone dans laquelle la première partie de couplage (124) du premier panneau (120) et la deuxième partie de couplage (144) du deuxième panneau (140) sont en contact entre elles.

5. Pare-chocs de véhicule selon l'une quelconque des revendications 1 à 4, dans lequel le mélange est une composition dans laquelle du polyuréthane et de longues fibres de verre sont mélangés.

6. Procédé pour fabriquer un pare-chocs de véhicule selon la revendication 1, **caractérisé par** les faits de :
placer un premier panneau (120) et un deuxième panneau (140) dans un premier moule ;
recouvrir le premier panneau (120) et le deuxième panneau (140) avec un mélange ; et
former un panneau de renforcement (200) en comprimant le premier panneau (120) et le deuxième panneau (140) recouverts avec le mélange avec un deuxième moule pour expanser et mettre en forme le panneau de renforcement (200) dans des espaces entre le premier panneau (120), le deuxième panneau (140) et le deuxième moule.

7. Procédé selon la revendication 6, dans lequel la mise en place du premier panneau (120) et du deuxième panneau (140) dans le premier moule comprend un processus pour agencer un élément de blocage (300, 3000) sur le premier panneau (120) et le deuxième panneau (140) dans le premier moule.

8. Procédé selon la revendication 6 ou 7, dans lequel le mélange est une composition dans laquelle du polyuréthane et de longues fibres de verre sont mélangés.

9. Procédé selon l'une quelconque des revendications 6 à 8, dans lequel le recouvrement du premier panneau (120) et du deuxième panneau (140) avec le panneau de renforcement (200) a lieu sous la forme d'un mélange par pulvérisation (S200) et comprend le recouvrement de la première surface non exposée (120a) du premier panneau (120) et de la deuxième surface non exposée (140a) du deuxième panneau (140) avec le panneau de renforcement (200).
